# EUROPÄISCHE PATENTSCHRIFT

(11) **EP 3 253 508 B1**
(45) Veröffentlichungstag und Bekanntmachung des Hinweises auf die Patenterteilung: **20.03.2019**
(21) Anmeldenummer: 16702515.4
(22) Anmeldetag: 28.01.2016
(51) Int. Cl.: B23K 11/06, B23K 11/10, B23K 26/21, B23K 101/04, B23K 103/16

(54) **VERFAHREN ZUM HERSTELLEN EINES BAUTEILS AUS EINEM SANDWICHMATERIAL UND BAUTEIL AUS EINEM SANDWICHMATERIAL**
METHOD FOR PRODUCING A COMPONENT FROM A SANDWICH MATERIAL AND COMPONENT PRODUCED FROM A SANDWICH MATERIAL
PROCÉDÉ DE FABRICATION D'UN COMPOSANT À PARTIR D'UN MATÉRIAU SANDWICH ET COMPOSANT CONSTITUÉ D'UN MATÉRIAU SANDWICH

(30) Priorität: 04.02.2015 DE 102015201879
(43) Veröffentlichungstag der Anmeldung: 13.12.2017
(73) Patentinhaber: ThyssenKrupp Steel Europe AG, 47166 Duisburg (DE); thyssenkrupp AG, 45143 Essen (DE)
(72) Erfinder: SIEG, Hans-Joachim, 38108 Braunschweig (DE)
(74) Vertreter: thyssenkrupp Intellectual Property GmbH
(86) Internationale Anmeldenummer: PCT/EP2016/051761
(87) Internationale Veröffentlichungsnummer: WO 2016/124471

(56) Entgegenhaltungen:
- DE-A1-102011 054 362
- US-A1- 2011 123 780
- US-B2- 6 910 253

## Beschreibung

Die Erfindung betriff ein Verfahren und ein Bauteil aus einem Sandwichmaterial, gemäß dem Oberbegriff der Ansprüche 1 und 8, wie z.B. aus US 6 910 253 B2 bekannt. Aus der deutschen Offenlegungsschrift 10 2011 054 362 ist ein Verfahren zur Herstellung eines Verbundblechteils mit metallischem Randbereich bekannt. Dieses Dokument ist im Oberbegriff als nächstliegender Stand der Technik gewürdigt. Ferner offenbart das Dokument entsprechend hergestellte Bauteile, die als großflächige Teile im Kraftfahrzeugbau als Außenhautteile eingesetzt werden können, da in Bezug auf die Dimensionierung der Bauteile durch die Verwendung von Sandwichwerkstoffen im Vergleich zu Vollmaterialien Gewicht eingespart werden kann. Derartige Bauteile mit metallischem Rand lassen sich in konventionellen Fahrzeug-Fertigungsstraßen wie monolithische Werkstoffe problemlos vorzugsweise Widerstandspunktschweißen, da ein elektrischer Kontakt zwischen den metallischen Decklagen im Randbereich sichergestellt ist.

Ausgehend von dem Stand der Technik lag der Erfindung die Aufgabe zugrunde, ein Verfahren bereitzustellen, mit welchem Bauteile aus Sandwichmaterialien insbesondere in Form von Profilen hergestellt werden können, welche im Vergleich zu Metallprofilen deutlich leichter sind, sowie entsprechende Bauteile aus Sandwichmaterialien anzugeben.

Die oben genannte Aufgabe wird dadurch gelöst, dass das Sandwichmaterial derart geformt wird, dass die zwei kunststofffreien Kantenbereiche einander überlappend oder sich im Stumpfstoß berührend positioniert werden und die kunststofffreien Kantenbereiche in dieser Position bereichs- oder punktweise form-, kraft- und/oder stoffschlüssig miteinander verbunden werden.

Dadurch, dass kein Kunststoff im Verbindungsbereich vorhanden ist, kann ein Bauteil aus einem Sandwichmaterial in Form eines im Wesentlichen geschlossenen Profils mit einer belastbaren Verbindung hergestellt werden, welches ein im Vergleich zu Metallprofilen geringeres Gewicht bei vergleichbaren Eigenschaften aufweist, wenn am Sandwichmaterial zunächst zwei sich gegenüberliegende kunststofffreie Kantenbereiche erzeugt werden, wobei durch weitere Formung des Sandwichmaterials die zwei kunststofffreien Kantenbereiche einander überlappend oder sich im Stumpfstoß berührend positioniert werden und in dieser Position bereichs- oder punktweise form-, kraft- und/oder stoffschlüssig miteinander verbunden werden.

Gemäß einer ersten Ausgestaltung des erfindungsgemäßen Verfahrens wird das Sandwichmaterial zunächst zu einem offenen Profil, insbesondere im Wesentlichen zu einem U-förmigen Profil geformt, bevor die Verdrängung des Kunststoffs aus den zwei Kantenbereichen erfolgt. Dies ist von Vorteil, da insbesondere die bei dem U-förmigen Profil erzeugten abstehenden Schenkel im Wesentlichen in eine und dieselbe Richtung weisen und dadurch der Kunststoff aus den Kantenbereichen relativ einfach durch geeignete Mittel erwärmt und/oder verdrängt, abgetrennt und/oder abgeführt werden kann. Vorzugsweise erfolgt die Ausrichtung der Schenkel und Verdrängung des Kunststoffes aus den Kantenbereichen in Richtung der Schwerkraft.

Gemäß einer weiteren Ausgestaltung des erfindungsgemäßen Verfahrens kann das Formen durch ein Abkanten oder eine U-O-Formgebung vorzugsweise in konventionellen Umformwerkzeugen erfolgen. Dies hat den Vorteil, dass auf bestehende Anlagen zugegriffen werden kann, um insbesondere blechartige Sandwichmaterialien umzuformen, wobei vorzugsweise die Verdrängung des Kunststoffs aus den zwei gegenüberliegenden Kantenbereichen beim Abkanten oder bei der U-O-Formgebung insbesondere in einem separaten Verfahrensschritt respektive in einer separaten Vorrichtung, beispielsweise in einer Vorrichtung wie sie in der vorgenannten Offenlegungsschrift offenbart ist, erfolgt. Dadurch lassen sich aufwendige und kostspielige Umrüstungen an den konventionellen Umformwerkzeugen bei beispielsweise einer geringen Investition in Anlagen, wie beispielsweise in Figur 12 der DE 10 2011 054 362 gezeigt, vermeiden. Alternativ kann das Formen insbesondere von bandförmigem Sandwichmaterial durch ein Rollprofilieren auf vorzugsweise konventionellen Profilieranlagen erfolgen, wobei vorzugsweise die Verdrängung des Kunststoffs aus den zwei gegenüberliegenden Kantenbereichen beim Rollprofilieren inline erfolgt. Insbesondere können geeignete Mittel zur Erwärmung und/oder zur Verdrängung des Kunststoffs in bestehende Anlagen durch geringfügige Anpassung und geringe Anlageninvestition integriert werden. Das Abkanten, die U-O-Formgebung wie auch das Rollprofilieren als Formgebungsprozesse sind Stand der Technik.

Gemäß einer weiteren Ausgestaltung des erfindungsgemäßen Verfahrens erfolgt ein stoffschlüssiges Verbinden mittels Kleben oder Schweißen, insbesondere mittels Rollnahtschweißen, Quetschnahtschweißen, Laserschweißen oder Widerstandspunktschweißen. Alternativ oder kumulativ kann auch ein kraft- und/oder formschlüssiges Verbinden, insbesondere ein mechanisches Verbinden mittels beispielsweise Durchsetzfügen oder Stanznieten erfolgen.

Gemäß einem weiteren Aspekt der vorliegenden Erfindung wird die eingangs genannte Aufgabe für ein Bauteil dadurch gelöst, dass das Sandwichmaterial zwei sich gegenüberliegende kunststofffreie Kantenbereiche aufweist, welche in einer einander überlappenden oder sich in einer im Stumpfstoß berührenden Position bereichs- oder punktweise form-, kraft- und/oder stoffschlüssig miteinander verbunden sind.

Aus Sandwichmaterialien lassen sich Bauteile in Form von im Wesentlichen geschlossenen Profilen herstellen, die eine belastbare Verbindung aufgrund der kunststofffreien Kantenbereiche aufweisen. Das Sandwichmaterial umfasst mindestens zwei metallische Decklagen und mindestens eine zwischen den metallischen Decklagen angeordnete Schicht aus einem Kunststoff, wobei das Sandwichmaterial zumindest entlang einer Kante einen kunststofffreien Bereich aufweist, in welchem sich die metallischen Decklagen bereichs- oder punktweise berühren, wobei die Materialdicke der mindestens einen, vorzugsweise der mindestens zwei metallischen Decklagen höchstens 1,5 mm, insbesondere höchstens 1,0 mm, vorzugsweise höchstens 0,5 mm und besonders bevorzugt höchstens 0,35 mm beträgt und die Materialdicke der Schicht aus Kunststoff mindestens 0,2 mm, insbesondere mindestens 0,3 mm, vorzugsweise mindestens 0,4 mm beträgt. Die mindestens zwei metallischen Decklagen haben jeweils eine Materialdicke von mindestens 0,05 mm, vorzugsweise mindestens 0,1 mm und die Schicht aus Kunststoff hat eine Materialdicke von maximal 8,0 mm, insbesondere maximal 5,0 mm, vorzugsweise maximal 3,0 mm, besonders bevorzugt maximal 2,0 mm. Die Eigenschaften des profilierten Sandwichmaterials können bei vergleichbarer Materialdicke im Wesentlichen denen eines profilierten Vollmaterials bei gleichzeitig reduzierter Masse entsprechen. Weiteres Leichtbaupotential besteht, wenn abhängig von der Anwendung die metallischen Decklagen unterschiedlich dick ausgebildet sind.

Gemäß einer weiteren Ausgestaltung des erfindungsgemäßen Bauteils sind die mindestens eine, vorzugsweise die mindestens zwei metallischen Decklagen vorzugsweise aus einem Stahlwerkstoff gebildet. Stahlwerkstoffe sind im Vergleich zu anderen Metallen, insbesondere im Vergleich zu Leichtmetallwerkstoffen zwar etwas schwerer, jedoch kostengünstig zu beziehen und leicht zu verarbeiten, insbesondere kalt zu verformen. Insbesondere werden metallisch, vorzugsweise beidseitig beschichtete Stahlwerkstoffe verwendet. Als Beschichtungen kommen zink- oder aluminiumbasierte Systeme in Frage, wobei verzinkte Stahlwerkstoffe besonders bevorzugt verwendet werden, da sie kostengünstig bereitgestellt werden können. Denkbar ist auch die Verwendung von Leichtmetallwerkstoffen als metallische Decklagen, beispielsweise Aluminiumwerkstoffe und/oder Magnesiumwerkstoff und/oder deren Kombination, insbesondere auch in Kombination mit Stahlwerkstoffen, wodurch aufgrund der geringeren Dichte der Leichtmetallwerkstoffe im Vergleich zu Stahlwerkstoffen das Gewicht weiter gesenkt werden kann.

Gemäß einer weiteren Ausgestaltung des erfindungsgemäßen Bauteils ist die mindestens eine Schicht aus Kunststoff vorzugsweise aus einem thermoplastischen Kunststoff gebildet. Der thermoplastische Kunststoff insbesondere bis mindestens 160°C, vorzugsweise bis mindestens 180°C, besonders bevorzugt bis mindestens 200°C temperaturbeständig. Bevorzugte Kunststoffe sind beispielsweise Systeme auf Basis PA, PE und/oder deren Mischungen.

Gemäß einer weiteren Ausgestaltung des erfindungsgemäßen Bauteils ist das Bauteil ein Abkantprofil oder U-O-Profil. Alternativ ist das Bauteil ein Rollprofil.

Gemäß einer weiteren Ausgestaltung des erfindungsgemäßen Bauteils entspricht beim Sandwichmaterial die Summe der Materialdicken der metallischen Decklagen im Wesentlichen der Materialdicke der Schicht aus Kunststoff. Dies ist von Vorteil, da sich vorzugsweise kein Versatz bei der einander überlappenden und berührenden Position der kunststofffreien Kantenbereiche bilden kann.

Im Folgenden wird die Erfindung anhand einer Ausführungsbeispiele darstellenden Zeichnung näher erläutert. Gleiche Teile sind mit gleichen Bezugszeichen versehen. Es zeigt
- Figur 1):: eine schematische Abfolge von Schritten zur Herstellung eines ersten Ausführungsbeispiels eines erfindungsgemäßen Bauteils gemäß einer ersten Ausgestaltung eines erfindungsgemäßen Verfahrens sowie schematische Schnittansichten des Bauteils zu bestimmten Zeitpunkten,
- Figur 2a, b):: ein zweites und ein drittes Ausführungsbeispiel eines erfindungsgemäßen Bauteils in einer schematischen Querschnittsansicht.

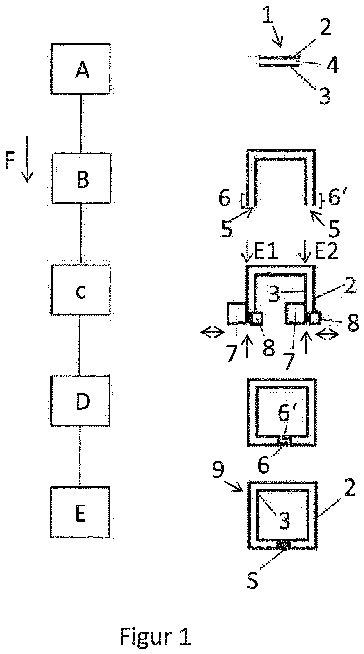

In Figur 1 ist schematisch eine Abfolge von Schritten zur Herstellung eines ersten Ausführungsbeispiels eines erfindungsgemäßen Bauteils gemäß einer ersten Ausgestaltung eines erfindungsgemäßen Verfahrens am Beispiel des Rollprofilierens dargestellt. In Schritt A wird vorzugsweise ein bandförmiges Coil aus einem Sandwichmaterial 1, beispielsweise in Form eines Spaltbandes bereitgestellt (nicht dargestellt). Das Sandwichmaterial 1 umfasst mindestens zwei metallische Decklagen 2,3, wobei die Materialdicke der jeweiligen metallischen Decklage 2,3 höchstens 1,5 mm, insbesondere höchstens 1,0 mm, vorzugsweise höchstens 0,5 mm und besonders bevorzugt höchstens 0,35 mm beträgt, wobei die metallischen Decklagen vorzugsweise aus einem Stahlwerkstoff gebildet sind und beidseitig vorzugsweise elektrolytisch verzinkt sind, und mindestens eine zwischen den metallischen Decklagen 2,3 angeordnete Schicht 4 aus einem Kunststoff, wobei die Materialdicke der Schicht aus Kunststoff mindestens 0,2 mm, insbesondere mindestens 0,3 mm, vorzugsweise mindestens 0,4 mm beträgt, wobei der Kunststoff aus einem thermoplastischen Kunststoff gebildet ist und insbesondere bis mindestens 160°C, vorzugsweise bis mindestens 180°C, besonders bevorzugt bis mindestens 200°C temperaturbeständig ist. Eine schematische Schnittansicht des Sandwichmaterials 1 ist auf der rechten Seite in Figur 1 dargestellt.

Das bandförmige Coil, beispielsweise Spaltband wird abgehaspelt, kontinuierlich ggf. in einer oder mehreren nicht dargestellten Stationen gerichtet und/oder gereinigt und mindestens einer ersten Station (Schritt B) zugeführt, in welcher zunächst das Sandwichmaterial 1 mittels mindestens einem ersten Satz von nicht dargestellten Profilierwalzen (Profilierrollen) zu einem offenen Profil, insbesondere im Wesentlichen zu einem U-förmigen Profil kontinuierlich geformt wird. Eine schematische Querschnittsansicht des erzeugten U-förmigen Profils ist auf der rechten Seite in Figur 1 dargestellt, wobei vorzugsweise die bei dem U-förmigen Profil erzeugten abstehenden Schenkel 5,5' im Wesentlichen in eine und dieselbe Richtung weisen.

Nach der Erzeugung des U-förmigen Profils werden in Schritt C die zwei sich gegenüberliegenden Kantenbereiche 6,6' des Sandwichmaterials 1 in Förderrichtung F mittels hier nicht dargestellten geeigneten Mitteln zumindest teilweise erwärmt, um den Kunststoff im Kantenbereich 6,6' zu erweichen. Es können radiative, induktive und/oder konduktive Mittel zur Erwärmung verwendet werden, beispielsweise mittels an den Kantenbereichen 6,6' angeordneten Induktoren und/oder durch kontaktierende temperierte Rollen (nicht dargestellt). Durch die Temperatureinwirkung erweicht der Kunststoff 4, welcher durch Krafteinwirkung auf mindestens eine der metallischen Decklagen 2,3 mittels geeigneten Mitteln, beispielsweise mittels Rollen 7,8 aus dem Kantenbereich 6,6' verdrängt wird, insbesondere erfolgt die Verdrängung des Kunststoffs 4 aus dem Kantenbereich 6,6' inline. Eine schematische Querschnittsansicht zum Zeitpunkt des Verdrängens des Kunststoffs 4 zur Erzeugung eines kunststofffreien Kantenbereichs 6,6' an dem U-förmigen Profil ist auf der rechten Seite in Figur 1 dargestellt. Auf der linken Seite des Schenkels 5 kontaktiert die linke Rolle 7 lediglich die metallische Decklage 2 in der Ebene E1 ohne formgebende Einwirkung und sie wirkt der durch die rechte Rolle 8 einwirkende Kraft und Verformung der metallischen Decklage 3 zur Verdrängung des Kunststoffs und Erzeugung eines kunststofffreien Randbereichs 6 entgegen. Auf der rechten Seite des Schenkels 5' kontaktiert die linke Rolle 7 lediglich die metallische Decklage 3 in der Ebene E2 ohne formgebende Einwirkung und sie wirkt der durch die rechte Rolle 8 einwirkende Kraft und Verformung der metallischen Decklage 2 zur Verdrängung des Kunststoffs und Erzeugung eines kunststofffreien Randbereichs 6' entgegen. Durch den Doppelpfeil ist angedeutet, dass die Rollen 7,8 individuell und je nach Bedarf verstellbar sind, um die kunststofffreien Kantenbereiche 6,6' beliebig zu formen, insbesondere abhängig von der Art des zu erzeugenden Verbindungsbereichs (überlappend oder Stumpfstoß). Dadurch, dass die bei dem U-förmigen Profil erzeugten abstehenden Schenkel 5,5' im Wesentlichen in eine und dieselbe Richtung weisen, vorzugsweise in Richtung der Schwerkraft, kann relativ einfach der verdrängte bzw. austretende weiche Kunststoff durch geeignete Mittel abgetrennt (aufgefangen) und/oder abgeführt werden.

Das erzeugte U-förmige Profil aus dem bandförmigen Sandwichmaterial 1 mit kunststofffreien Kantenbereichen 6,6' wird kontinuierlich einer weiteren Station (Schritt D) zugeführt, in welcher das Sandwichmaterial 1 mittels mindestens einem weiteren Satz von nicht dargestellten Profilierwalzen (Profilierrollen) derart geformt wird, dass die zwei kunststofffreien Kantenbereiche 6,6' einander überlappend positioniert werden. Eine schematische Querschnittsansicht des derart geformten Sandwichmaterials 1 zu einem im Wesentlichen geschlossenen Profil ist auf der rechten Seite in Figur 1 dargestellt. Alternativ und nicht dargestellt können die zwei kunststofffreien Kantenbereiche sich im Stumpfstoß berührend positioniert werden.

Nach dem Formen zu einem im Wesentlichen geschlossenen Profil wird das bandförmige Sandwichmaterial 1 kontinuierlich einer weiteren Station (Schritt E) zugeführt, in welcher das bandförmige Sandwichmaterial 1 (geschlossenes Profil) entweder auf Maß abgeteilt wird und in einem separaten Schritt respektive Vorrichtung die kunststofffreien Kantenbereiche in der einander überlappenden Position bereichs- oder punktweise form-, kraft- und/oder stoffschlüssig miteinander verbunden werden
(nicht dargestellt), oder zunächst kontinuierlich die kunststofffreien Kantenbereiche 6,6' in der einander überlappenden Position bereichs- oder punktweise form-, kraft- und/oder stoffschlüssig miteinander verbunden werden, vorzugsweise zumindest bereichsweise, besonders bevorzugt vollständig entlang der kunststofffreien Kantenbereiche 6,6' stoffschlüssig mittels Rollnahtschweißen, Quetschnahtschweißen oder Laserschweißen miteinander verbunden werden und anschließend das zumindest bereichsweise zu einem geschlossenen Profil erzeugte bandförmige Sandwichmaterial 1 auf Maß abgeteilt wird (nicht dargestellt). In der einfachsten Ausführung wird ein erfindungsgemäßes Bauteil 9 als Rollprofil mit einem konstanten Querschnitt, in diesem Beispiel mit einem rechteckigen Querschnitt zur weiteren Verwendung bereitgestellt, welches als schematische Querschnittsansicht auf der rechte Seite in Figur 1 abgebildet ist. Beispielsweise sind die Materialdicken der metallischen Decklagen derart auf die Materialdicke der Schicht aus Kunststoff abgestimmt, vorzugsweise entspricht die Summe der Materialdicken der metallischen Decklagen im Wesentlichen der Materialdicke der Schicht aus Kunststoff, wodurch sich kein Versatz im Bereich der Verbindung S, weder auf der Seite der innenliegenden metallischen Decklage 3 noch auf der Seite der außenliegenden metallischen Decklage 2 bildet. Derartige Bauteile können überall in den Bereichen eingesetzt werden, in denen Leichtbau betrieben wird, beispielsweise im straßen- oder schienengebundenen Fahrzeugbau, wie KFZ, NFZ, LKW, Gleisfahrzeuge, sowie in der Luft- und Raumfahrt oder im Schiffbau.

Alternativ und hier nicht dargestellt kann das Formen vorzugsweise blechartiger Sandwichmaterialien durch ein Abkanten oder eine U-O-Formgebung beispielsweise in konventionellen Umformwerkzeugen erfolgen, wodurch vorteilhaft auf bestehende Anlagen zugegriffen werden kann. Die Verdrängung des Kunststoffs aus den zwei gegenüberliegenden Kantenbereichen beim Abkanten oder bei der U-O-Formgebung kann beispielsweise in einem separaten Verfahrensschritt respektive in einer separaten Vorrichtung erfolgen, wobei auch die zwei kunststofffreien Kantenbereiche, die entweder einander überlappend oder sich im Stumpfstoß berührend positioniert sind, beispielsweise in einem separaten Verfahrensschritt respektive in einer separaten Vorrichtung bereichs- oder punktweise form-, kraft- und/oder stoffschlüssig miteinander verbunden werden. Das erspart aufwendige und kostspielige Umrüstungen an den konventionellen Umformwerkzeugen.

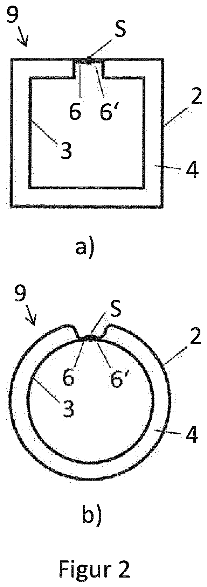

In der Figur 2a ist ein zweites Ausführungsbeispiel eines erfindungsgemäßen Bauteils 9 dargestellt, jedoch mit dem Unterschied zu dem in Figur 1 abgebildeten Rollprofil, dass die kunststofffreien Kantenbereiche 6,6' derart umgeformt sind, das sie in einer im Stumpfstoß berührenden Position bereichs- oder punktweise form-, kraft- und/oder stoffschlüssig, beispielsweise mittels Laserschweißen über eine Schweißnaht S miteinander verbunden sind. Das in der Figur 2b dargestellte dritte Ausführungsbeispiel unterscheidet sich von dem zweiten Ausführungsbeispiel zum Einen durch einen kreisförmigen Querschnitt und zum Anderen, dass die innenliegende metallische Decklage 3 keinen Versatz im Stumpfstoß im Vergleich zur außenliegenden metallischen Decklage 2 des Bauteils 9 aufweist. Ohne die Anwesenheit von Kunststoff in den Kantenbereichen können belastbare Verbindungen S an den erfindungsgemäßen Bauteilen 9 (geschlossene Profile) bereitgestellt werden. Das zweite und dritte Ausführungsbeispiel können sowohl durch Abkanten oder U-O-Formgebung oder durch Rollprofilieren hergestellt werden. Alternativ oder kumulativ kann auch ein kraft- und/oder formschlüssiges Verbinden, insbesondere ein mechanisches Verbinden mittels beispielsweise Durchsetzfügen oder Stanznieten erfolgen.

Die Erfindung ist nicht auf die in der Zeichnung dargestellten Ausführungsbeispiele beschränkt, vielmehr können erfindungsgemäße Bauteile auch nicht längskonstante Querschnitte aufweisen, insbesondere wenn diese mittels Abkanten oder U-O-Formgebung aus einem blechartigen Sandwichmaterial, vorzugsweise aus einer entsprechend zugeschnitten Platine geformt sind.

### Bezugszeichenliste

- 1: Sandwichmaterial (bandförmig, blechförmig)
- 2, 3: metallische Decklage
- 4: Schicht aus Kunststoff
- 5, 5': Schenkel
- 6, 6': Kantenbereich
- 7, 8: Rollen
- 9: Bauteil, geschlossenes Profil
- A, B, C, D, E: Schrittfolge, Verfahrensschritte
- E1, E2: Ebene
- F: Förderrichtung
- S: Verbindung, Schweißnaht

## Patentansprüche

1. Verfahren zum Herstellen eines Bauteils (9) aus einem blech- oder bandförmigen Sandwichmaterial (1), welches mindestens zwei metallische Decklagen (2, 3) und mindestens eine zwischen den metallischen Decklagen (2, 3) angeordnete Schicht aus einem Kunststoff (4) umfasst, das Sandwichmaterial (1) entlang zwei Kantenbereiche zumindest teilweise erwärmt wird, um den Kunststoff (4) in den Kantenbereichen zu erweichen, welcher durch Krafteinwirkung auf mindestens eine der metallischen Decklagen (2, 3) im Wesentlichen vollständig aus den Kantenbereichen verdrängt und dadurch zwei kunststofffreie Kantenbereiche (6,6') erzeugt werden, in welchen sich die metallischen Decklagen (2, 3) bereichs- oder punktweise berühren, **dadurch gekennzeichnet, dass**
das Sandwichmaterial (1) derart geformt wird, dass die zwei kunststofffreien Kantenbereiche (6, 6') einander überlappend oder sich im Stumpfstoß berührend positioniert werden und die kunststofffreien Kantenbereiche (6, 6') in dieser Position bereichs- oder punktweise form-, kraft- und/oder stoffschlüssig (S) miteinander verbunden werden.

2. Verfahren nach Anspruch 1,
**dadurch gekennzeichnet, dass**
das Sandwichmaterial (1) zunächst zu einem offenen Profil, insbesondere im Wesentlichen zu einem U-förmigen Profil geformt wird, bevor die Verdrängung des Kunststoffs aus den zwei Kantenbereichen erfolgt.

3. Verfahren nach Anspruch 1 oder 2,
**dadurch gekennzeichnet, dass**
das Formen durch ein Abkanten oder U-O-Formgebung oder Rollprofilieren erfolgt.

4. Verfahren nach Anspruch 3,
**dadurch gekennzeichnet, dass**
die Verdrängung des Kunststoffs aus den zwei gegenüberliegenden Kantenbereichen beim Abkanten oder U-O-Formgebung in einem separaten Verfahrensschritt erfolgt.

5. Verfahren nach Anspruch 3,
**dadurch gekennzeichnet, dass**
die Verdrängung des Kunststoffs aus den zwei gegenüberliegenden Kantenbereichen beim Rollprofilieren inline erfolgt.

6. Verfahren nach einem der vorgenannten Ansprüche,
**dadurch gekennzeichnet, dass**
das stoffschlüssige Verbinden (S) mittels Kleben oder Schweißen, insbesondere mittels Rollnahtschweißen, Quetschnahtschweißen, Laserschweißen oder Widerstandspunktschweißen erfolgt.

7. Verfahren nach einem der Ansprüche 1 bis 5,
**dadurch gekennzeichnet, dass**
das kraft- und/oder formschlüssige Verbinden, insbesondere ein mechanisches Verbinden mittels beispielsweise Durchsetzfügen oder Stanznieten erfolgen.

8. Bauteil (9) aus einem Sandwichmaterial (1), welches mindestens zwei metallischen Decklagen (2,3) und mindestens eine zwischen den metallischen Decklagen angeordnete Schicht aus einem Kunststoff (4) umfasst, das Sandwichmaterial (1) entlang zwei Kanten jeweils einen kunststofffreien Bereich (6,6') aufweist, in welchem sich die metallischen Decklagen (2,3) bereichs- oder punktweise berühren,
**dadurch gekennzeichnet, dass**
das Sandwichmaterial (1) derart geformt ist, dass es zwei sich gegenüberliegende kunststofffreie Kantenbereiche (6,6') aufweist, welche in einer einander überlappenden oder in einer im Stumpfstoß berührenden Position bereichs- oder punktweise form-, kraft- und/oder stoffschlüssig (S) miteinander verbunden sind.

9. Bauteil (9) nach Anspruch 8,
**dadurch gekennzeichnet dass**,
die Materialdicke mindestens einer der metallischen Decklagen (2,3) höchstens 1,5 mm, insbesondere höchstens 1,0 mm, vorzugsweise höchstens 0,5 mm und besonders bevorzugt höchstens 0,35 mm beträgt und die Materialdicke der Schicht aus Kunststoff (4) mindestens 0,2 mm, insbesondere mindestens 0,3 mm, vorzugsweise mindestens 0,4 mm beträgt.

10. Bauteil (9) nach Anspruch 8 oder 9,
**dadurch gekennzeichnet, dass**
mindestens eine metallische Decklage (2,3) vorzugsweise aus einem Stahlwerkstoff und/oder aus einem Leichtmetallwerkstoff gebildet ist.

11. Bauteil (9) nach einem der Ansprüche 8 bis 10,
**dadurch gekennzeichnet, dass**
die mindestens eine Schicht aus Kunststoff (4) aus einem thermoplastischen Kunststoff gebildet ist.

12. Bauteil (9) nach einem der Ansprüche 8 bis 11,
**dadurch gekennzeichnet, dass**
das Bauteil (9) ein Abkantprofil, U-O-Profil oder ein Rollprofil ist.

13. Bauteil (9) nach einem der Ansprüche 8 bis 12,
**dadurch gekennzeichnet, dass**
beim Sandwichmaterial (1) die Summe der Materialdicken der metallischen Decklagen (2,3) im Wesentlichen der Materialdicke der Schicht aus Kunststoff (4) entspricht.

## Claims

1. Method for producing a component (9) from a sandwich material (1) in sheet or strip form, which sandwich material comprises at least two metallic surface layers (2,3) and at least one layer composed of a plastic (4) arranged between the metallic surface layers (2,3), the sandwich material (1) is at least partially heated along two edge regions in order to soften the plastic (4) in the edge regions, which plastic is substantially completely displaced out of the edge regions by action of force on at least one of the metallic surface layers (2,3), and in this way, two plastic-free edge regions (6,6') are produced in which the metallic surface layers (2,3) are in contact in regions or at points, **characterized in that** the sandwich material (1) is deformed such that the two plastic-free edge regions (6, 6') are positioned so as to overlap one another or so as to be in contact with one another in the manner of a butt joint, and the plastic-free edge regions (6, 6') are connected to one another in said position in positively locking, non-positive locking and/or cohesive fashion (S) in regions or at points.

2. Method according to Claim 1, **characterized in that** the sandwich material (1) is deformed firstly to form an open profile, in particular substantially to form a U-shaped profile, before the displacement of the plastic out of the two edge regions is performed.

3. Method according to Claim 1 or 2, **characterized in that** the deformation is performed by folding or U-O shaping or roll profiling.

4. Method according to Claim 3, **characterized in that** the displacement of the plastic out of the two opposite edge regions is performed in a separate method step in the case of the folding or U-O shaping.

5. Method according to Claim 3, **characterized in that** the displacement of the plastic out of the two opposite edge regions is performed in line in the case of the roll profiling.

6. Method according to one of the preceding claims, **characterized in that** the cohesive connection (S) is performed by means of adhesive bonding or welding, in particular by means of roll seam welding, mash seam welding, laser welding or resistance spot welding.

7. Method according to one of Claims 1 to 5, **characterized in that** the non-positively locking and/or positively locking connection, in particular a mechanical connection, is performed by means of, for example, clinching or punch riveting.

8. Component (9) composed of a sandwich material (1) which comprises at least two metallic surface layers (2, 3) and at least one layer composed of a plastic (4) arranged between the metallic surface layers, the sandwich material (1) has, along two edges, in each case one plastic-free region (6, 6') in which the metallic surface layers (2, 3) are in contact in regions or at points, **characterized in that** the sandwich material (1) is deformed such that it has two mutually oppositely situated plastic-free edge regions (6, 6') which, in a position in which they overlap or are in contact in the manner of a butt joint, are connected to one another in positively locking, non-positively locking and/or cohesive fashion (S) in regions or at points.

9. Component (9) according to Claim 8, **characterized in that** the material thickness of at least one of the metallic surface layers (2, 3) is at most 1.5 mm, in particular at most 1.0 mm, preferably at most 0.5 mm and particularly preferably at most 0.35 mm, and the material thickness of the layer composed of plastic (4) is at least 0.2 mm, in particular at least 0.3 mm, preferably at least 0.4 mm.

10. Component (9) according to Claim 8 or 9, **characterized in that** at least one metallic surface layer (2, 3) is formed preferably from a steel material and/or from a light metal material.

11. Component (9) according to one of Claims 8 to 10, **characterized in that** the at least one layer composed of plastic (4) is formed from a thermoplastic material.

12. Component (9) according to one of Claims 8 to 11, **characterized in that** the component (9) is a folded profile, U-O profile or a rolled profile.

13. Component (9) according to one of Claims 8 to 12, **characterized in that** in the sandwich material (1), the sum of the material thicknesses of the metallic surface layers (2, 3) substantially corresponds to the material thickness of the layer composed of plastic (4).

## Revendications

1. Procédé de fabrication d'un composant (9) à partir d'un matériau sandwich en forme de tôle ou de bande (1), qui comprend au moins deux couches de recouvrement métalliques (2, 3) et au moins une couche en une matière plastique (4) disposée entre les couches de recouvrement métalliques (2, 3), dans lequel on chauffe au moins en partie le matériau sandwich (1) le long de deux zones de bord afin de ramollir la matière plastique (4) dans les zones de bord, on la refoule essentiellement entièrement hors des zones de bord par l'application d'une force à au moins une des couches de recouvrement métalliques (2, 3) et on produit ainsi des zones de bord (6, 6') dépourvues de matière plastique, dans lesquelles les couches de recouvrement métalliques (2, 3) se touchent localement ou ponctuellement, **caractérisé en ce que** l'on met en forme le matériau sandwich (1) de telle manière que les deux zones de bord (6, 6') dépourvues de matière plastique soient positionnées en chevauchement mutuel ou en se touchant bout à bout et on assemble les zones de bord (6, 6') dépourvues de matière plastique l'une à l'autre localement ou ponctuellement dans cette position, par emboîtement, par adhérence et/ou par une liaison matérielle (S).

2. Procédé selon la revendication 1, **caractérisé en ce que** l'on met en forme le matériau sandwich (1) d'abord en un profilé ouvert, en particulier essentiellement en un profilé en forme de U, avant de procéder au refoulement de la matière plastique hors des deux zones de bord.

3. Procédé selon la revendication 1 ou 2, **caractérisé en ce que** l'on effectue la mise en forme par pliage ou par formage en U-O ou par profilage au rouleau.

4. Procédé selon la revendication 3, **caractérisé en ce que** l'on procède au refoulement de la matière plastique hors des deux zones de bord opposées lors du pliage ou du formage en U-O dans une étape de procédé séparée.

5. Procédé selon la revendication 3, **caractérisé en ce que** l'on procède au refoulement de la matière plastique hors des deux zones de bord opposées en ligne lors du profilage au rouleau.

6. Procédé selon l'une quelconque des revendications précédentes, **caractérisé en ce que** l'on effectue la liaison matérielle (S) par collage ou soudage, en particulier par soudage à la molette, soudage transversal à la molette, soudage au laser ou soudage par résistance par points.

7. Procédé selon l'une quelconque des revendications 1 à 5, **caractérisé en ce que** l'on effectue l'assemblage par adhérence et/ou par emboîtement, en particulier un assemblage mécanique par exemple par clinchage ou poinçonnage.

8. Composant (9) constitué d'un matériau sandwich (1), qui comprend au moins deux couches de recouvrement métalliques (2, 3) et au moins une couche en une matière plastique (4) disposée entre les couches de recouvrement métalliques, le matériau sandwich (1) présente le long de deux bords respectivement une zone dépourvue de matière plastique (6, 6'), dans laquelle les couches de recouvrement métalliques (2, 3) se touchent localement ou ponctuellement, **caractérisé en ce que** le matériau sandwich (1) est mis en forme de telle manière qu'il présente deux zones de bord dépourvues de matière plastique (6, 6') opposées l'une à l'autre, qui sont assemblées l'une à l'autre dans une position avec chevauchement mutuel ou en se touchant bout à bout localement ou ponctuellement, par emboîtement, par adhérence et/ou par une liaison matérielle (S).

9. Composant (9) selon la revendication 8, **caractérisé en ce que** l'épaisseur de matière d'au moins une des couches de recouvrement métalliques (2, 3) vaut au maximum 1,5 mm, en particulier au maximum 1,0 mm, de préférence au maximum 0,5 mm et de préférence encore au maximum 0,35 mm et l'épaisseur de matière de la couche en matière plastique (4) vaut au moins 0,2 mm, en particulier au moins 0,3 mm, de préférence au moins 0,4 mm.

10. Composant (9) selon la revendication 8 ou 9, **caractérisé en ce qu'**au moins une couche de recouvrement métallique (2, 3) est formée de préférence en un matériau d'acier et/ou en un matériau de métal léger.

11. Composant (9) selon l'une quelconque des revendications 8 à 10, **caractérisé en ce que** ladite au moins une couche en matière plastique (4) est formée en une matière plastique thermoplastique.

12. Composant (9) selon l'une quelconque des revendications 8 à 11, **caractérisé en ce que** le composant (9) est un profilé coudé, un profilé en U-O, ou un profilé roulé.

13. Composant (9) selon l'une quelconque des revendications 8 à 12, **caractérisé en ce que** dans le matériau sandwich (1) la somme des épaisseurs de matière des couches de recouvrement métalliques (2, 3) correspond essentiellement à l'épaisseur de matière de la couche en matière plastique (4).
